# EUROPÄISCHE PATENTANMELDUNG

(11) **EP 3 231 741 A1**
(43) Veröffentlichungstag der Anmeldung: **18.10.2017**
(21) Anmeldenummer: 16165604.6
(22) Anmeldetag: 15.04.2016
(51) Int. Cl.: B65G 9/00

(54) **TRANSPORTTASCHE, FÖRDERVORRICHTUNG UND VERFAHREN ZUM ÖFFNEN BZW. SCHLIESSEN EINER TRANSPORTTASCHE**

(71) Anmelder: Dematic Logistics GmbH, 33609 Bielefeld (DE)
(72) Erfinder: OTTO, Thomas, 33659 Bielefeld (DE)
(74) Vertreter: Dantz, Jan Henning

(57) **Zusammenfassung**

Eine Transporttasche (1) für eine Fördervorrichtung weist eine erste Taschenwand (2) auf, eine zweite Taschenwand (3), eine an einem oberen Ende einer der Taschenwände (2, 3) angeordnete Einhängvorrichtung (7), wobei an einem unteren, von der Einhängvorrichtung (7) entfernten Ende der Taschenwände (2, 3) jeweils reversibel aneinander koppelbare Schließelemente angeordnet sind, mit denen die unteren Enden der Taschenwände (2, 3) zu einem Taschenboden miteinander verbindbar sind, wobei die Schließelemente als parallel zueinander ausgerichtete, miteinander verrastbare Rastleisten (8, 9) ausgebildet sind, wobei die Rastleisten (8, 9) derart ausgebildet sind, dass sie aus einer die Transporttasche (1) am unteren Ende verschließenden, miteinander verrasteten Transportstellung durch Gegeneinanderverschieben in Richtung der Längsachse (I) der Rastleisten (8, 9) in eine Entraststellung verschiebbar sind, bei der die Rastleisten (8, 9) voneinander lösbar sind, zur Öffnung der Transporttasche (1) am unteren Ende. Desweiteren wird eine Fördervorrichtung beschrieben.

## Beschreibung

Die vorliegende Erfindung betrifft eine Transporttasche für eine Fördervorrichtung gemäß dem Oberbegriff des Anspruchs 1, eine Fördervorrichtung, ein Verfahren zum Öffnen einer Transporttasche sowie ein Verfahren zum Schließen einer Transporttasche.

Eine gattungsgemäße Transporttasche ist beispielsweise aus der EP 2 130 968 B1 bekannt. Die dort beschriebene Transporttasche besteht im Wesentlichen aus zwei Taschenwänden, die an einem oberen Ende über einen Bügel miteinander verbunden sind, an dem eine Einhängevorrichtung zum Einhängen in einer Schiene einer Fördervorrichtung dient. Die unteren Enden der Taschenwände sind über eine Kupplung miteinander verbunden, die über einen am oberen Ende einer der Taschenwände angeordneten Betätigungsmechanismus betätigbar ist, um die unteren Ende der Taschenwände zum Transportieren eines Gegenstandes aneinander zu koppeln. Im aneinander gekoppelten Zustand wird so eine Tasche ausgebildet. Zum Entladen werden die Taschenwände voneinander getrennt, so dass der mit der Transporttasche transportierte Gegenstand nach unten herausfallen kann.

Aufgabe der vorliegenden Erfindung ist es, eine Transporttasche, eine Fördervorrichtung und Verfahren zum Öffnen bzw. Schließen einer solchen Transporttasche bereitzustellen, mit der eine nochmals vereinfachte Öffnung und Schließung der Transporttasche am unteren Ende ermöglicht ist.

Diese Aufgabe wird durch eine Transporttasche für eine Fördervorrichtung mit den Merkmalen des Anspruchs 1, durch eine Fördervorrichtung mit den Merkmalen des Anspruchs 11, ein Verfahren zum Öffnen einer Transporttasche mit den Merkmalen des Anspruchs 15 sowie durch ein Verfahren zum Schließen einer Transporttasche mit den Merkmalen des Anspruchs 16 gelöst.

Die erfindungsgemäße Transporttasche weist eine erste Taschenwand, eine zweite Taschenwand sowie an einem oberen Ende einer der Taschenwände angeordnete Einhängvorrichtung auf. An einem unteren, von der Einhängvorrichtung entfernten Ende der Taschenwände sind als reversibel aneinander koppelbare Schließelemente angeordnet, mit denen die unteren Enden der Taschenwände zu einem die Trasnporttasche nach unten verschließenden Taschenboden miteinander verbindbar sind.

Die Schließelemente sind als parallel zueinander auseinander ausgerichtete, miteinander verrastbare Rastleisten ausgebildet. Die Rastleisten sind dabei aus einer die Transporttasche am unteren Ende verschließenden, miteinander verrasteten Transportstellung durch relatives Verschieben gegeneinander in Richtung der Längsachse der Rastleisten in eine Entraststellung verschiebbar, bei der die Rastleisten zur Öffnung der Transporttasche am unteren Ende voneinander lösbar sind.

Eine solche Transporttasche ist in besonders einfacher Weise nach unten öffenbar und wiederverschließbar. Damit ergibt sich auch ein einfach durchzuführender Entladevorgang der Transporttasche.

Durch die Ausbildung der Schließelemente als miteinander verrastbare Rastleisten, die in Längsrichtung zueinander verschiebbar sind, ist außerdem ein unbeabsichtigtes Öffnen der Transporttasche zuverlässig verhindert.

Gleichzeitig ermöglicht die Verschiebung der Rastleisten zueinander in Längsrichtung der Rastleisten ein besonders einfaches Entrasten und damit ein sehr einfaches Öffnen der Transporttasche nach unten.

Vorteilhafte Ausführungsvarianten der Erfindung sind Gegenstand der Unteransprüche.

Gemäß einer vorteilhaften Ausführungsvariante der Erfindung sind an der ersten Rastleiste wenigstens zwei in Richtung ihrer Längsachse voneinander beabstandete Rastelemente angeordnet, die im miteinander verrasteten Zustand der Rastleisten in Rastausnehmungen der zweiten Rastleiste gehalten sind, die in Richtung ihrer Längsachse voneinander beabstandet sind.

Dadurch ist ein einfaches Verrasten der Rastelement in den Rastausnehmungen ermöglicht. Ein Entrasten wird durch eine lineare Verschiebebewegung der Rastleisten erreicht.

Die Rastleisten sind gemäß einer vorteilhaften Ausführungsvariante gleich lang ausgebildet. Dabei ist die erste Rastleiste im mit der zweiten Rastleiste verrasteten Zustand in Richtung ihrer Längsachse parallel versetzt zur zweiten Rastleiste angeordnet.

Das Versetzungsmaß der Parallelversetzung der Rastleisten beträgt bevorzugt zwischen 1 cm und 10 cm, insbesondere zwischen 1 cm und 5 cm, wodurch zum einen eine hinreichend stabile Verrastung im verrasteten Zustand gewährleistet wird und zum zweiten eine hinreichende Durchbiegesteifigkeit insbesondere der überstehenden Enden der Rastleisten im verrasteten Zustand beim Entrastungsvorgang.

Die Rastelemente sind gemäß einer bevorzugten Ausführungsvariante als Haken und die Rastausnehmungen als Hinterschnitt ausgebildet.

Besonders bevorzugt sind die Rastelemente dabei c-förmig, die Hinterschnitte hintergreifend, ausgebildet.

Die beidseitige Umgreifung bzw. Hintergreifung der Hinterschnitte durch die Rastelemente gewährleistet eine besonders zuverlässige Verrastung der Rastleisten aneinander.

Gemäß einer weiteren vorteilhaften Ausführungsvariante ist an der ersten Rastleiste wenigstens eine in Richtung der zweiten Rastleiste vorstehende Nase angeformt ist, die im miteinander verrasteten Zustand der Rastleisten in einer Ausnehmung auf einer der ersten Rastleiste zugewandten Seitenkante der zweiten Rastleiste einliegt, wobei die Breite der Ausnehmung in Richtung der Längsachse der zweiten Rastleiste so bemessen ist, dass die Nase bei in die entrastete Position verschobenen Rastleisten aus der Ausnehmung heraus geschoben ist.

Dadurch ist eine zuverlässige Trennung der Rastleisten voneinander unmittelbar nach dem Entrastungsvorgang gewährleistet, da die Nase nach dem Verschieben der Rastleisten in die Entrastungsstellung die zweite Rastleiste von der ersten Rastleiste senkrecht zur Längsrichtung der Rastleisten wegdrückt.

Gemäß einer weiteren vorteilhaften Ausführungsvariante sind die oberen, der Einhängvorrichtung nahen Enden der Taschenwände an einem um eine parallel zur Längsachse der Rastleisten ausgerichtete Schwenkachse schwenkbaren, eine Tascheneinfüllöffnung bildenden Gestänge befestigt. Die Einhängvorrichtung ist dabei bevorzugt am Gestänge befestigt.

Mit einem solchen Gestänge ist ein einfaches Öffnen des oberen Bereichs der Transporttasche zum Befüllen derselben mit dem zu befördernden Gegenstand bzw. der zu befördernden Gegenstände ermöglicht.

Die Taschenwände sind bevorzugt durch zwei faltbare Seitenwände miteinander verbunden. Je nach Größe der zu befördernden Gegenstände ist es auch denkbar, die Taschenwände an den Seitenrändern lediglich über Schnüre, Bänder oder dergleichen miteinander zu verbinden, um ein seitliches Herausfallen des zu befördernden Gegenstandes zu verhindern.

Die Rastleisten sind bevorzugt an den Taschenwänden festgeklemmt. Denkbar ist auch, die Rastleisten in dazu vorgesehene Taschen in den Taschenwänden einzunähen oder anderweitig zu befestigen.

Die erfindungsgemäße Fördervorrichtung zeichnet sich durch eine oder mehrere wie oben beschriebene Transporttaschen aus.

Besonders bevorzugt weist eine Entladestation der Fördervorrichtung zwei Druckstempel mit einer senkrecht zur Richtung der Längsachse der Rastleisten sich erstreckenden Andruckfläche auf, zwischen denen die Transporttasche positionierbar ist.

Dabei ist wenigstens einer der Druckstempel in Richtung der Längsachse der Rastleisten derart verfahrbar, dass der Abstand zwischen den Druckstempeln zwischen einem Einfahrmaß, das größer ist als die Gesamtlänge der parallel versetzten Rastleisten im miteinander verrasteten Zustand, und einem Entrastungsmaß, das der Länge der Rastleisten entspricht, veränderbar ist.

Mit einer solchen Entladestation ist in einfacher Weise ein automatisches Entrasten der Rastleisten und damit ein automatisches Öffnen der Transporttasche zum Entladen des in der Transporttasche transportierten Gegenstandes ermöglicht.

Besonders bevorzugt erfolgt auch die Schließung des unteren Bereichs der Transporttasche in automatischer Weise.

Dazu ist eine der Entladestation in Förderrichtung nachfolgende Taschenschließstation vorgesehen, mit zwei senkrecht zur Richtung der Längsachse der Rastleisten aufeinander zu bewegbaren Druckplatten, zwischen denen die Transporttasche positionierbar ist, wobei die Druckplatten von einer die voneinander getrennten Rastleisten zwischen sich aufnehmenden Position in eine die Rastleisten senkrecht zur Richtung der Längsachse der Rastleisten zusammendrückenden und dabei miteinander verrastenden Schließposition bewegbar sind.

Die Druckplatten sind dabei besonders bevorzugt um eine parallel zur Längsachse der Rastleisten verlaufende Schwenkachse verschwenkbar und können so unterhalb der in die Taschenschließstation geleiteten Transporttaschen befestigt werden. Die Transporttasche kann so ohne Berührung der Druckplatten in den Eingriffbereich der Druckplatten geführt werden. Anschließend werden die Druckplatten in die Schließposition verschwenkt und dabei die Rastleisten der Transporttasche durch Zusammendrücken miteinander verrastet.

Das erfindungsgemäße Verfahren zum Öffnen der Transporttasche zeichnet sich durch seine einfach und zuverlässig bewerkstelligbaren Öffnungsschritte zur Öffnung der Transporttasche aus.

Ebenso einfach und zuverlässig ist das Schließen der Transporttasche durch das erfindungsgemäße Verfahren zum Schließen der Transporttasche ermöglicht.

Nachfolgend werden bevorzugte Ausführungsvarianten der Erfindung anhand der beiliegenden Zeichnungen näher erläutert. Es zeigen:
- Figur 1: eine schematische perspektivische Ansicht einer Ausführungsvariante einer erfindungsgemäßen Transporttasche im geöffneten Zustand,
- Figur 2: eine Seitenansicht der in Figur 1 gezeigten Transporttasche,
- Figur 3: eine Frontansicht der in Figur 1 gezeigten Transporttasche,
- Figur 4: eine perspektivische Ansicht der Transporttasche aus Figur 1 in geschlossenem Zustand,
- Figur 5: eine Seitenansicht der Transporttasche im geschlossenen Zustand,
- Figur 6: eine Frontansicht der Rastleisten im miteinander verrasteten Zustand,
- Figur 7: eine Schnittansicht der miteinander verrasteten Rastleisten entlang einer in Figur 6 mit A-A bezeichneten Schnittlinie,
- Figur 8: eine Schnittansicht der miteinander verrasteten Rastleisten entlang einer in Figur 6 mit C-C bezeichneten Schnittlinie,
- Figur 9: eine Schnittansicht der miteinander verrasteten Rastleisten entlang einer in Figur 8 mit E-E bezeichneten Schnittlinie durch einen Rastbereich der Rastleisten,
- Figur 10: eine der Figur 6 entsprechende Darstellung der Rastleisten in der Entraststellung,
- Figur 11: eine Schnittansicht durch eine in Figur 10 mit B-B bezeichnete Schnittlinie,
- Figur 12: eine Schnittansicht der Rastleisten im entrasteten Zustand entlang einer mit F-F bezeichneten Schnittlinie in Figur 11,
- Figur 13: eine perspektivische Darstellung einer Entladestation einer Ausführungsvariante einer erfindungsgemäßen Fördervorrichtung und
- Figur 14: eine perspektivische Ansicht einer Ausführungsvariante einer Taschenschließstation der Fördervorrichtung.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Transporttasche, der Taschenwand, der Rastleiste, der Rastelemente, der Fördervorrichtung und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

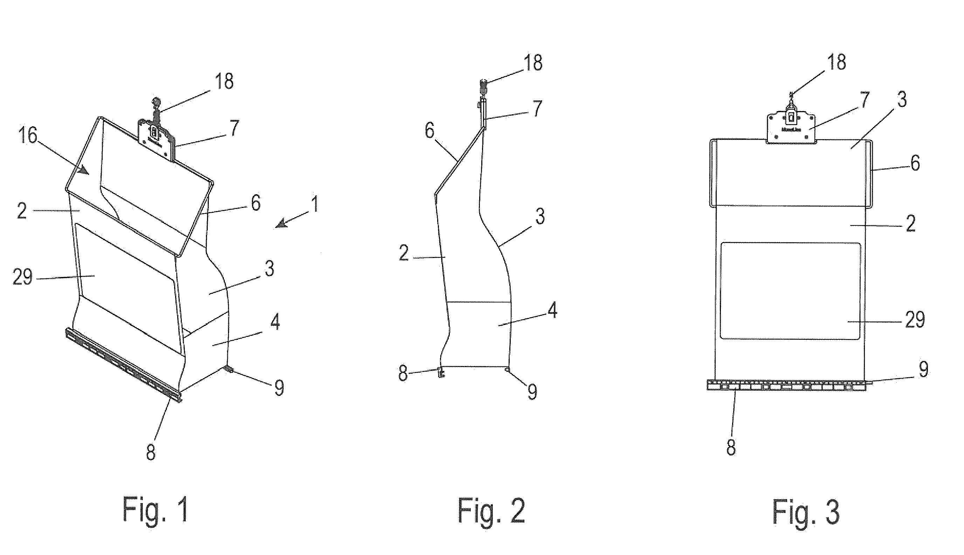

In den Figuren 1 bis 5 ist mit dem Bezugszeichen 1 insgesamt eine Ausführungsvariante einer erfindungsgemäßen Transporttasche bezeichnet. Die Transporttasche 1 weist eine erste Taschenwand 2 und eine zweite Taschenwand 3 auf.

Beide Taschenwände 2, 3 sind an einem oberen Ende bevorzugt an einem Gestänge 6 festgelegt. Das Gestänge 6 ist dabei bevorzugt als rechteckiger Rahmen ausgebildet, der eine Tascheneinfüllöffnung 16 bildet, durch die die Transporttasche 1 mit einem zu transportierenden Gegenstand oder mehreren solcher zu transportierender Gegenstände befüllbar ist.

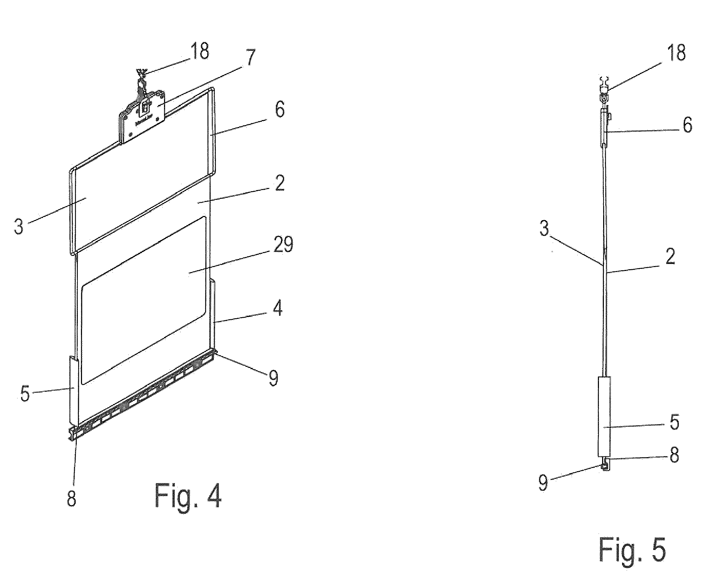

Zum Befüllen der Transporttasche wird das als rechteckiger Rahmen ausgebildete Gestänge 6 dabei aus einer vertikal ausgerichteten Position, gezeigt in den Figuren 4 oder 5, um eines der Gestängeteile, an dem eine der Taschenwände 2, 3 festgelegt ist, in eine winklig zur Vertikalen stehende oder horizontale Position verschwenkt, wie beispielsweise in den Figuren 1 oder 2 gezeigt.

Am oberen Ende einer der Taschenwände 2, 3, im Ausführungsbeispiel gemäß Figur 1 am oberen Ende der zweiten Taschenwand 3 ist eine Einhängvorrichtung 7 angeordnet. Diese Einhängvorrichtung 7 umgreift dabei bevorzugt einen Schenkel des Gestänges 6, an dem die zweite Taschenwand 3 befestigt ist.

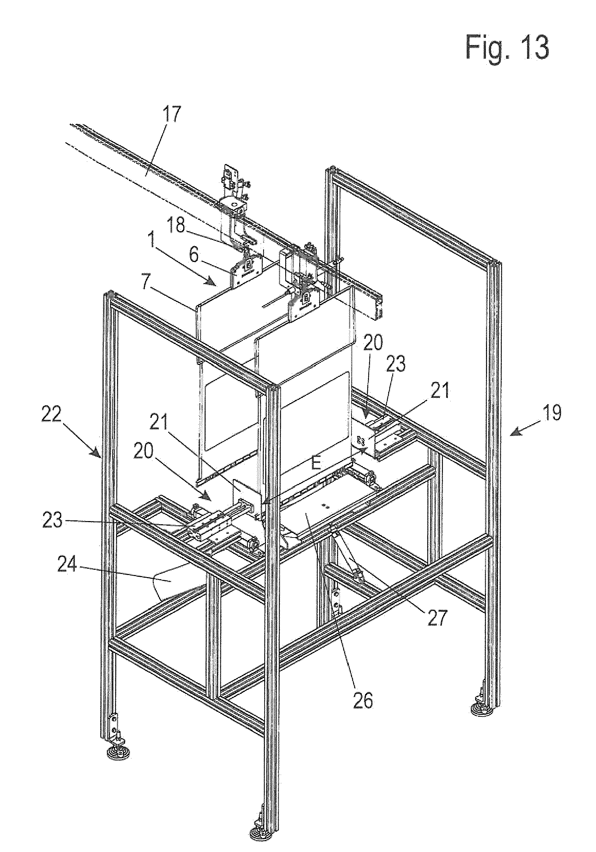

Mit der Einhängvorrichtung 7 ist bevorzugt ein Halteadapter 18 verbunden, dessen Kopfstück in ein Schienenprofil 17 einer Fördervorrichtung mit einer an einer Förderrichtung x bewegbaren Förderkette einsetzbar ist, wie es beispielsweise in Figur 13 dargestellt ist.

Im unteren Bereich der Transporttasche 1 sind die Taschenwände 2, 3 bevorzugt durch Seitenwände 4, 5 verbunden. Sowohl die Taschenwände 2, 3 als auch die Seitenwände 4, 5 bestehen dabei zumindest teilweise aus einem Textil. Denkbar ist auch, ein Teilstück der ersten oder zweiten Taschenwand 2, 3 formstabil als Platte 29 auszubilden, wie es in Figur 1 dargestellt ist.

Anstelle eines separaten Taschenbodens sind am unteren, von der Einhängvorrichtung 7 entfernten Ende der Taschenwände 2, 3 jeweils reversibel aneinander koppelbare Schließelemente angeordnet, mit denen die unteren Enden der Taschenwände 2, 3 zu einem Taschenboden miteinander verbindbar sind.

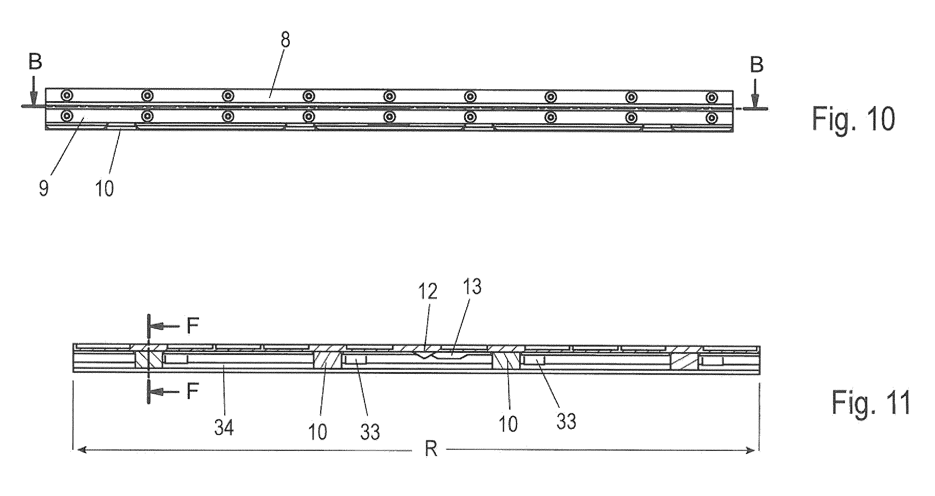

Diese Schließelemente sind als parallel zueinander ausrichtete, miteinander verrastbare Rastleisten 8, 9 ausgebildet. Die Rastleisten 8, 9 sind dabei derart ausgebildet, dass sie aus einer die Transporttasche 1 am unteren Ende verschließenden, miteinander verrasteten Transportstellung, wie sie beispielsweise in den Figuren 4 und 6 bis 9 gezeigt ist, durch gegeneinander Verschieben in Richtung der Längsachse I der Rastleisten 8, 9 in eine Entraststellung, wie sie in den Figuren 10 bis 12 gezeigt ist, verschiebbar sind, bei der die Rastleisten 8, 9 voneinander lösbar sind, zur Öffnung der Transporttasche 1 am unteren Ende.

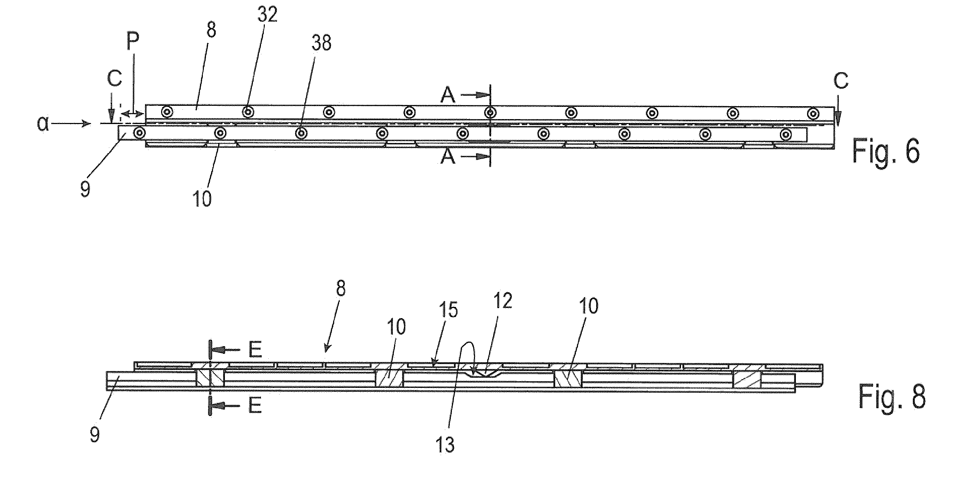

Wie in den Figuren 6 bis 12 gezeigt, sind an der ersten Rastleiste 8 wenigstens zwei in Richtung ihrer Längsachse I voneinander beabstandete Rastelemente 10 angeordnet sind, die im miteinander verrasteten Zustand der Rastleisten 8, 9 in Rastausnehmungen 11 der zweiten Rastleiste 9 gehalten sind, die ebenfalls in Richtung ihrer Längsachsen I voneinander beabstandet sind.

Die Rastausnehmungen 11 sind dabei bevorzugt als Hinterschnitte ausgebildet, die durch verdickte Rastbereiche 33 der zweiten Rastleiste 9 gebildet werden, die, im Schnitt vorzugsweise pilzförmig geformt, über eine Außenkontur 35 der im verrasteten Zustand zwischen die Rastelemente 10 der ersten Rastleiste 8 vorstehen.

Der Abstand der Rastbereiche 33 der zweiten Rastleiste 9 entspricht dabei dem Abstand der Rastelemente 10 in Längsrichtung der Rastleisten 8, 9 voneinander.

Die Rastleisten 8, 9 sind, wie in den Figuren 10 und 11 gezeigt, bevorzugt gleich lang ausgebildet.

Die erste Rastleiste 8 ist im mit der zweiten Rastleiste 9 verrasteten Zustand in Richtung ihrer Längsachse I parallel versetzt zur zweiten Rastleiste 9 um ein Versetzungsmaß p angeordnet. Dieses Versetzungsmaß p der Parallelversetzung der Rastleisten 8, 9 beträgt dabei vorzugsweise zwischen 1 cm und 10 cm, besonders bevorzugt zwischen 1 cm und 5 cm.

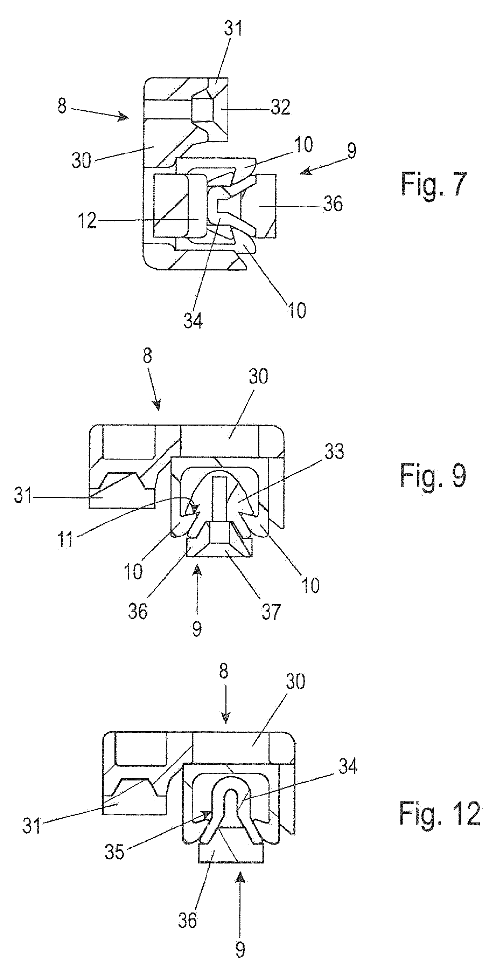

Durch Verschieben der Rastleisten 8, 9 in Längsrichtung I von der in Figur 6 gezeigten Raststellung in die in Figur 10 gezeigte Endraststellung werden die Rastelemente 10 außer Eingriff von den Rastausnehmungen 11 gebracht, wie es beispielsweise in Figur 12 dargestellt ist.

Dadurch werden die Rastleisten 8, 9 voneinander gelöst, so dass ein in der Transporttasche 1 befindlicher Gegenstand durch den durch die voneinander beabstandeten Rastleisten 8, 9 bewirkte Öffnung des Taschenbodens der Transporttasche 1 nach unten herausfallen und beispielsweise über eine Rutsche 24 einer Entladestation, wie sie in Figur 13 dargestellt ist, weggeführt werden kann.

Die Rastelemente 10 sind, wie in den Figuren 7, 9 und 12 dargestellt, bevorzugt als Haken ausgebildet. In dem in den Figuren 7, 9 und 12 gezeigten Ausführungsbeispiel sind die Rastelemente 10 c-förmig ausgebildet und umgreifen die Rastbereiche 33 der zweiten Rastleisten 9 beidseitig.

Denkbar ist auch, die Rastelemente 10 als I-förmige Haken auszubilden, die wechselweise die Hinterschnitte 11 der zweiten Rastleiste 9 hintergreifen.

Um nach erfolgtem Verschieben der Rastleisten 8, 9 gegeneinander in die Entraststellung, wie sie in Figur 11 dargestellt ist, die beiden Rastleisten 8, 9 auseinanderzudrücken, ist an der ersten Rastleiste 8 wenigstens ein in Richtung der zweiten Rastleiste 9 vorstehende Nase angeformt, wie es beispielhaft in Figur 11 gezeigt ist.

Diese Nase 12 liegt im miteinander verrasteten Zustand der Rastleisten 8, 9 in einer Ausnehmung 13 auf einer der ersten Rastleiste 8 zugewandten Seitenkante 15 der zweiten Rastleiste 9. Die Breite der Ausnehmung 13 in Richtung der Längsachse I der zweiten Rastleiste 9 ist dabei so bemessen ist, dass die Nase 12 bei in die entrastete Position verschobenen Rastleisten 8, 9, wie in Figur 11 gezeigt, aus der Ausnehmung 13 herausgeschoben ist und dadurch die zweite Rastleiste 9 von der ersten Rastleiste 8 senkrecht zur Richtung der Längsachse I der Rastleisten 8, 9 wegdrückt.

Die Rastleisten 8, 9 sind in einer Position an den jeweiligen Taschenwänden 2, 3 befestigt, beispielsweise verklemmt, dass sie im von dem Gestänge 6 herunterhängenden Zustand versetzt zueinander positioniert sind, wie es beispielsweise in Figur 3 dargestellt ist. Zur Befestigung der Rastleisten 8, 9 an der jeweiligen Taschenwand 2, 3 weisen die Rastleisten 8, 9 einen jeweiligen Grundkörper 30, 36 auf, an dem jeweils ein Klemmteil 31, insbesonder in Gestalt einer Klemmleiste mithilfe von Schrauben 37 befetigbar ist, wobei der untere Rand der jeweiligen Taschenwand 2, 3 zwischen Grundkörper 30 und Klemmteil 31 eingeklemmt ist.

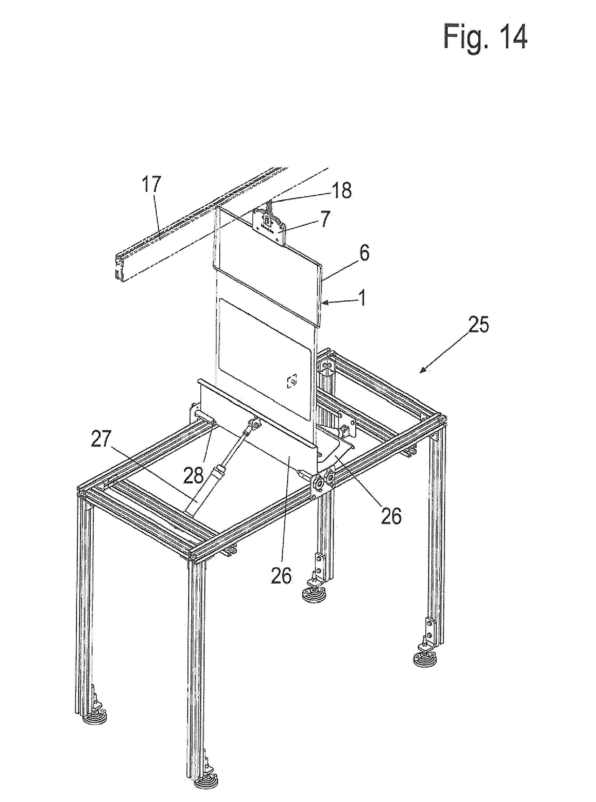

Die Rastleisten 8, 9 ermöglichen ein einfaches Verrasten durch Aneinanderdrücken der Rastleisten 8, 9 in einer Taschenschließstation 25, wie sie beispielsweise in Figur 14 dargestellt ist, so dass die Transporttasche 1 nach erfolgter Entleerung durch Zusammenführen der Taschenwände 2, 3 wieder verschließbar ist.

Ein Ausschnitt einer erfindungsgemäßen Fördervorrichtung zur Beförderung von Gegenständen, hier eine Entladestation 19, ist in Figur 13 dargestellt.

An dieser Entladestation 19 ankommende Transporttaschen 1, die mit einem zu befördernden Gegenstand gefüllt sind, werden hier geleert, wobei zur Entleerung die Rastleisten 8, 9 aus ihrer Raststellung in die Entraststellung bewegt werden.

Dazu weist die Entladestation 19 zwei Druckstempel 20 auf, mit einer senkrecht zur Richtung der Längsachse I der Rastleisten 8, 9 sich erstreckenden Andruckflächen 21, zwischen denen die Transporttasche 1 positionierbar ist.

Die Druckstempel 20 sind hier in Richtung der Längsachse I der Rastleisten 8, 9 derart verfahrbar, dass der Abstand zwischen den Druckstempeln 20 zwischen einem Einfahrmaß E, das größer ist als die Gesamtlänge der parallel versetzten Rastleisten 8, 9 im miteinander verrasteten Zustand, und einem Entrastungsmaß R, das der Länge der Rastleisten 8, 9 entspricht, veränderbar ist.

Denkbar ist auch, nur einen der Druckstempel 20 verfahrbar an einem Gestell 22 der Entladestation 19 der Fördervorrichtung zu lagern.

Zur maschinell erfolgenden Entrastung der Rastleisten 8, 9 sind die Druckstempel 20 mithilfe eines Antriebs 23, bevorzugt als elektromotorischer Antrieb ausgeführt, an dem Gestell 22 montiert.

Unterhalb der Druckstempel 20 ist die Rutsche 24 positioniert, zur Wegführung des mit der Transporttasche 1 transportierten Gegenstandes.

Die anschließende Wiederverschließung der Transporttasche 1 erfolgt bevorzugt in einer in Förderrichtung x nachfolgenden Taschenschließstation 25, wie sie in Figur 14 beispielhaft gezeigt ist.

Die Taschenschließstation 25 weist zwei senkrecht zur Richtung der Längsachse I der Rastleisten 8, 9 aufeinander zu bewegbare Druckplatten 26 auf, zwischen denen die Transporttasche 1 positionierbar ist.

Die Druckplatten 26 sind dabei von einer die voneinander getrennten Rastleisten 8, 9 zwischen sich aufnehmenden Position in eine die Rastleisten 8, 9 senkrecht zur Richtung der Längsachse I der Rastleisten 8, 9 zusammendrückenden und dabei miteinander verrastenden Schließposition bewegbar.

Bei der hier gezeigten Ausführungsvariante der Taschenschließstation 25 sind die Druckplatten 26 um eine parallel zur Längsachse der Rastleisten 8, 9 verlaufende Schwenkachse 28 verschwenkbar.

### Bezugszeichenliste

- 1: Transporttasche
- 2: erste Taschenwand
- 3: zweite Taschenwand
- 4: Seitenwand
- 5: Seitenwand
- 6: Gestänge
- 7: Einhängvorrichtung
- 8: erste Rastleiste
- 9: zweite Rastleiste
- 10: Rastelement
- 11: Rastausnehmung
- 12: Nase
- 13: Ausnehmung
- 14: Seitenkante
- 15: Seitenkante
- 16: Tascheneinfüllöffnung
- 17: Schienenprofil
- 18: Halteadapter
- 19: Entladestation
- 20: Druckstempel
- 21: Andruckfläche
- 22: Gestell
- 23: Antrieb
- 24: Rutsche
- 25: Taschenschließstation
- 26: Druckplatte
- 27: Stellstange
- 28: Schwenkachse
- 29: Platte
- 30: Grundkörper
- 31: Klemmteil
- 32: Schraube
- 33: Rastbereich
- 34: Entrastbereich
- 35: Außenkontur
- 36: Grundkörper
- 37: Schraube
- 38:

- P: Versetzungsmaß
- X: Förderrichtung
- E: Einfahrmaß
- R: Entrastungsmaß

## Patentansprüche

1. Transporttasche (1) für eine Fördervorrichtung, aufweisend
- eine erste Taschenwand (2),
- eine zweite Taschenwand (3),
- eine an einem oberen Ende einer der Taschenwände (2, 3) angeordnete Einhängvorrichtung (7),
- wobei an einem unteren, von der Einhängvorrichtung (7) entfernten Ende der Taschenwände (2, 3) jeweils reversibel aneinander koppelbare Schließelemente angeordnet sind, mit denen die unteren Enden der Taschenwände (2, 3) zu einem Taschenboden miteinander verbindbar sind,
**dadurch gekennzeichnet, dass**
- die Schließelemente als parallel zueinander ausgerichtete, miteinander verrastbare Rastleisten (8, 9) ausgebildet sind,
- wobei die Rastleisten (8, 9) derart ausgebildet sind, dass sie aus einer die Transporttasche (1) am unteren Ende verschließenden, miteinander verrasteten Transportstellung durch Gegeneinanderverschieben in Richtung der Längsachse (I) der Rastleisten (8, 9) in eine Entraststellung verschiebbar sind, bei der die Rastleisten (8, 9) voneinander lösbar sind, zur Öffnung der Transporttasche (1) am unteren Ende.

2. Transporttasche (1) nach Anspruch 1, **dadurch gekennzeichnet, dass** an der ersten Rastleiste (8) wenigstens zwei in Richtung ihrer Längsachse (I) voneinander beabstandete Rastelemente (10) angeordnet sind, die im miteinander verrasteten Zustand der Rastleisten (8, 9) in Rastausnehmungen (11) der zweiten Rastleiste (9) gehalten sind, die in Richtung ihrer Längsachse (I) voneinander beabstandet sind.

3. Transporttasche (1) nach Anspruch 1 oder 2, **dadurch gekennzeichnet, dass** die Rastleisten (8, 9) gleich lang ausgebildet sind und dass die erste Rastleiste (8) im mit der zweiten Rastleiste (9) verrasteten Zustand in Richtung ihrer Längsachse (I) parallel versetzt zur zweiten Rastleiste (9) angeordnet ist.

4. Transporttasche (1) nach Anspruch 3, **dadurch gekennzeichnet, dass** das Versetzungsmaß (p) der Parallelversetzung der Rastleisten (8, 9) zwischen 1 cm und 10 cm, insbesondere zwischen 1 cm und 5 cm beträgt.

5. Transporttasche (1) nach einem der vorstehenden Ansprüche, **dadurch gekennzeichnet, dass** die Rastelemente (10) als Haken und die Rastausnehmungen (11) als Hinterschnitt ausgebildet sind.

6. Transporttasche (1) nach einem der vorstehenden Ansprüche, **dadurch gekennzeichnet, dass** die Rastelemente (10) c-förmig die Hinterschnitte hintergreifend ausgebildet sind.

7. Transporttasche (1) nach einem der vorstehenden Ansprüche, **dadurch gekennzeichnet, dass** an der ersten Rastleiste (8) wenigstens eine in Richtung der zweiten Rastleiste (9) vorstehende Nase (12) angeformt ist, die im miteinander verrasteten Zustand der Rastleisten (8, 9) in einer Ausnehmung (13) auf einer der ersten Rastleiste (8) zugewandten Seitenkante (15) der zweiten Rastleiste (9) einliegt, wobei die Breite der Ausnehmung (13) in Richtung der Längsachse (I) der zweiten Rastleiste (9) so bemessen ist, dass die Nase (12) bei in die entrastete Position verschobenen Rastleisten (8, 9) aus der Ausnehmung (13) heraus geschoben ist.

8. Transporttasche (1) nach Anspruch 7, **dadurch gekennzeichnet, dass** obere, der Einhängvorrichtung (7) nahe Enden der Taschenwände (2, 3) an einem um eine parallel zur Längsachse (I) der Rastleisten (8, 9) ausgerichtete Schwenkachse schwenkbaren, eine Tascheneinfüllöffnung (16) bildenden Gestänge (6) befestigt sind, wobei die Einhängvorrichtung (7) an dem Gestänge (6) festgelegt ist.

9. Transporttasche (1) nach einem der vorstehenden Ansprüche, **dadurch gekennzeichnet, dass** die Taschenwände (2, 3) durch zwei faltbare Seitenwände (4, 5) miteinander verbunden sind.

10. Transporttasche (1) nach einem der vorstehenden Ansprüche, **dadurch gekennzeichnet, dass** die Rastleisten (8, 9) an den Taschenwänden (2, 3) festgeklemmt sind.

11. Fördervorrichtung zur Beförderung von Gegenständen, aufweisend
- ein Schienenprofil (17) mit einer in einer Förderrichtung (x) bewegbare Förderkette,
- Halteadapter (18) zur Halterung jeweils eines zu befördernden Gegenstandes,
- wenigstens eine Transporttasche (1) mit einer in den Halteadapter (18) einhängbaren Einhängvorrichtung (7),
- einer Beladestation und
- einer Entladestation (19),
**dadurch gekennzeichnet, dass**
- das die Transporttasche (1) gemäß einem der vorstehenden Ansprüche ausgebildet ist.

12. Fördervorrichtung nach Anspruch 11, **dadurch gekennzeichnet, dass** die Entladestation (19) zwei Druckstempel (20) mit einer senkrecht zur Richtung der Längsachse (I) der Rastleisten (8, 9) sich erstreckenden Andruckflächen (21) aufweist, zwischen denen die Transporttasche (1) positionierbar ist, wobei wenigstens einer der Druckstempel (20) in Richtung der Längsachse (I) der Rastleisten (8, 9) derart verfahrbar ist, dass der Abstand zwischen den Druckstempeln (20) zwischen einem Einfahrmaß (E), das größer ist als die Gesamtlänge der parallel versetzten Rastleisten (8, 9) im miteinander verrasteten Zustand, und einem Entrastungsmaß (R), das der Länge der Rastleisten (8, 9) entspricht, veränderbar ist.

13. Fördervorrichtung nach Anspruch 12, **gekennzeichnet durch** eine der Entladestation (19) in Förderrichtung (x) nachfolgende Taschenschließstation (25) mit zwei senkrecht zur Richtung der Längsachse (I) der Rastleisten (8, 9) aufeinander zu bewegbaren Druckplatten (26), zwischen denen die Transporttasche (1) positionierbar ist, wobei die Druckplatten (26) von einer die voneinander getrennten Rastleisten (8, 9) zwischen sich aufnehmenden Position in eine die Rastleisten (8, 9) senkrecht zur Richtung der Längsachse (I) der Rastleisten (8, 9) zusammendrückenden und dabei miteinander verrastenden Schließposition bewegbar sind.

14. Fördervorrichtung nach Anspruch 13, **dadurch gekennzeichnet, dass** die Druckplatten (26) um eine parallel zur Längsachse (I) der Rastleisten (8, 9) verlaufenden Schwenkachse (28) verschwenkbar sind.

15. Verfahren zum Öffnen einer Transporttasche (1) in einer Fördervorrichtung nach einem oder mehreren der Ansprüche 11 bis 14, **gekennzeichnet durch** die Verfahrenschritte:
- Verfahren der Transporttasche (1) entlang des Schienenprofils (17) in die Entladestation (19) zwischen die zwei Druckstempel (20),
- Verfahren der Druckstempel (20) auf einem dem Entrastungsmaß (R) entsprechenden Abstand voneinander, wobei die Rastleisten (8, 9) aus ihrer die Transporttasche (1) am unteren Ende verschließenden Raststellung durch Gegeneinanderverschieben in Richtung der Längsachse (I) der Rastleisten (8, 9) in eine Entraststellung verschoben werden, bei der die Rastleisten (8, 9) voneinander gelöst werden, zur Öffnung der Transporttasche (1) am unteren Ende.

16. Verfahren zum Schließen einer Transporttasche (1) in einer Fördervorrichtung nach einem oder mehreren der Ansprüche 11 bis 14, **gekennzeichnet durch** die Verfahrenschritte:
- Verfahren der Transporttasche (1) entlang des Schienenprofils (17) von der Entladestation (19) in die in Förderrichtung (x) nachfolgende Taschenschließstation (25) zwischen die zwei senkrecht zur Richtung der Längsachse (I) der Rastleisten (8, 9) aufeinander zu bewegbaren Druckplatten (26),
- Verfahren der Druckplatten (26) von einer die voneinander getrennten Rastleisten (8, 9) zwischen sich aufnehmenden Position in eine die Rastleisten (8, 9) senkrecht zur Richtung der Längsachse (I) der Rastleisten (8, 9) zusammendrückenden und dabei miteinander verrastenden Schließposition, zur Schließung der Transporttasche (1) am unteren Ende.
